# EUROPÄISCHE PATENTSCHRIFT

(11) **EP 2 493 589 B1**
(45) Veröffentlichungstag und Bekanntmachung des Hinweises auf die Patenterteilung: **15.10.2014**
(21) Anmeldenummer: 10740532.6
(22) Anmeldetag: 27.07.2010
(51) Int. Cl.: B01D 29/60, B01D 35/147, B01D 37/04, F15B 21/04

(54) **SAUGRÜCKLAUFFILTER MIT ZWEIFACHFUNKTIONSVENTIL**
SUCTION/RETURN FILTER HAVING A DUAL-FUNCTION VALVE
FILTRE RETOUR/ASPIRATION DOTÉ D'UNE SOUPAPE À DOUBLE FONCTION

(30) Priorität: 27.10.2009 DE 102009050794
(43) Veröffentlichungstag der Anmeldung: 05.09.2012
(73) Patentinhaber: Robert Bosch GmbH, 70469 Stuttgart (DE)
(72) Erfinder: ILINZEER, Sergej, 68804 Altenlussheim (DE)
(74) Vertreter: Thürer, Andreas
(86) Internationale Anmeldenummer: PCT/EP2010/004575
(87) Internationale Veröffentlichungsnummer: WO 2011/050872

(56) Entgegenhaltungen:
- WO-A1-99/21637
- WO-A1-99/37907
- WO-A1-2008/030323
- WO-A1-2009/050752
- WO-A2-2007/011223
- DE-A1- 4 206 420
- DE-A1- 19 511 482
- DE-A1-102007 056 362
- DE-U1- 9 215 351

## Beschreibung

Die vorliegende Erfindung betrifft einen Saugrücklauffilter für eine Fluid-Anlage gemäß dem Oberbegriff des Patentanspruchs 1.

Saugrücklauffilter dieser Gattung sind fluidtechnische Bauteile, die beispielsweise in geschlossenen Fluidkreisläufen wie Hydraulikkreisen, Kälte- oder Schmiermittelanlagen etc. integriert sind, um das umlaufende Betriebsmittel (beispielsweise Hydraulikfluid) von Verunreinigungen zu reinigen. Gleichzeitig kann über den Filter zusätzliches Betriebsmittel aus einem Betreibsmittelspeicher nachgesaugt werden, um ggf. Betriebsmittelverluste durch Leckage auszugleichen. Dieses spezielle Filtersystem findet seinen Einsatz beispielsweise bei Fahrzeugen, die Antrieb und Arbeitsbewegungen hydraulisch lösen. Aufgrund seiner Konstruktion sichert es den Pumpenschutz für den hydrostatischen Fahrantrieb im geschlossenen Kreislauf bei gleichzeitiger Vollstrom-Rücklauffiltrierung.

Charakteristisch bei manchen Filtersystemen gemäß dem Stand der Technik ist die Durchflussrichtung von innen nach außen. Sie ermöglicht eine leichte Wartung und ggf. eine magnetische Vorfiltrierung. So ist im Konkreten ein Saug-Rücklauffilter aus dem Stand der Technik bekannt, der für den Einbau in einen Druckmitteltank vorbereitet ist. Der bekannte Filter hat ein Gehäuse, das von unten mit einer Ventilplatte verschlossen ist. In dieser Platte ist ein Vorspannventil integriert, welches das Öl erst bei einem bestimmten Überdruck in den Tank strömen lässt. Dadurch steigt das gefilterte Öl wieder in den Filterkopf, wo es zur Versorgung z.B. einer Speisepumpe im geschlossenen Kreislauf verwendet werden kann. Dadurch werden Kaltstartprobleme beispielsweise bei mobilen Arbeitsmaschinen mit hydrostatischem Fahrantrieb eliminiert und die doppelte Filtration im Saug- und Rücklaufbereich in einem Filter integriert.

D.h., bei dem bekannten Saug-Rücklauffilter wird die aus dem System zurückströmende Ölmenge gefilter und durch das Vorspannventil unter Druck gesetzt. So kann die Speisepumpe des Hydrostaten mit gefiltertem Öl unter Druck befüllt werden. Sollte indessen die Rücklaufmenge unterhalb des Pumpenbedarfs einbrechen, muss die Pumpenversorgung dennoch gewährleistet werden. Hierzu ist in dem bekannten Filter ein Nachsaugventil integriert, durch das Druckmittel aus dem Tank ins Filtergehäuse gelangen kann. Dieses Nachsaugventil ist in der Regel mit einem sogenannten Schutzsieb ausgestattet.

Bei dem beschriebenen Stand der Technik hat es sich gezeigt, dass insbesondere im Nachsaugbetrieb eine Filtration des Druckmittels nicht optimal gewährleistet ist. Außerdem erhöht sich bei der Anordnung des bekannten Schutzsiebs aufgrund dessen kleiner Abmessungen die Druckdifferenz vor und nach dem Sieb erheblich was zu einer Verschlechterung des Wirkungsgrads der hydraulischen Anlage führt.

Als weiterer Stand der Technik sei die DE 10 2007 056 362 A1 genannt, aus der ebenfalls eine gattungsgemäße Filtervorrichtung bekannt ist. Dieser Rücklauf-Saugfilter hat ein Filtergehäuse, in dem ein eine Längsachse definierendes Filterelement aufgenommen ist. Ferner sind zwei Ventileinheiten in Form eines Bypassventils und eines Vorspannventils in zur Längsachse des Filterelements konzentrischer Weise längs der Längsachse angeordnet. Zur Gewährleistung eines Nachsaugbetriebs ist noch eine dritte Ventileinrichtung in Form eines Nachsaugventils ebenfalls in zur Längsachse des Filterelements konzentrischer Anordnung vorgesehen. Das Vorspannventil sowie das Nachsaugventil werden in diesem Stand der Technik von zwei Kolben gebildet, die sich jeweils gegenüber gehäusefesten Sitzflächen bewegen. Es hat sich hierbei herausgestellt, dass eine solche Konstruktion schwer herstellbar ist und sich auch die Montage deutlich komplizierter gestaltet.

Einen gattungsgemäßen Saug-Rücklauffilter zeigt die DE 42 06 420 C2. Dort bildet der Kolben eines Vorspannventils gleichzeitig die Sitzfläche für den Kolben eines Nachsaugventils. Der Kolben des Nachsaugventils ist auf einem Stift geführt, der am Kolben des Vorspannventils befestigt ist. Der Stift bildet außerdem das Widerlager für eine Feder, die den Kolben des Nachsaugventils vorspannt. Das Nachsaug- und das Vorspannventil sind direkt mit dem Tank verbunden. Der Kolben des Vorspannventils sitzt auf einer bodenseitigen Platte des Filtergehäuses auf und stützt sich mittels einer Feder an einer am Filtergehäuse gehaltenen Kappe ab.

Einen ähnlichen Saug-Rücklauffilter zeigt die WO 99/21637 A1. Ein Vorspannventil und ein Nachsaugventil sind im Zwischenraum eines zweistufigen Filters angeordnet. Über beide Ventile lässt sich der Zwischenraum mit dem Tank verbinden. Der Kolben des Vorspannventils bildet den Sitz des Nachsaugventils. Beide Kolben stützen sich über Federn an einem Gehäuseteil des zweiten Filters ab. Der zweite Filter selbst ist beweglich gelagert und kann seinerseits als Nachsaugventil dienen. Bei Anheben des zweiten Filters von seinem Aufsitz wird Fluid direkt aus dem Tank in den Auslass des Filters geleitet.

Einen Saug-Rücklauffilter zeigt auch die WO 2007/011223 A2. Eine Vorspann-Nachsaugventilkombination ist auf der hydraulischen Eingangsseite des Filters im Filterboden verbaut. Zusätzlich ist ein Vorspannventil vorhanden, welches ggf. die Ausgangsseite entlastet. Alle genannten Ventile sind direkt mit der bodenseitigen Tanköffnung verbunden.

Schließlich zeigt die DE 195 11 482 A1 einen Saug-Rücklauffilter bei dem die Ausgangsseite über eine Vorspann-Nachsaugventilkombination mit dem Tank verbindbar ist. Dabei wird das Vorspannventil durch einen beweglich angeordneten Filterkorb gebildet. Der Filterkorb bildet zudem einen Sitz und eine Führung für den Stift eines Nachsaugventils.

Angesichts dieses Stands der Technik ist es die Aufgabe der vorliegenden Erfindung, einen Saug-Rücklauffilter bereitzustellen, dessen Vorspann- und Nachsaugventil-Einrichtung funktioneller gestaltet ist.

Diese Aufgabe wird durch einen Saug-Rücklauffilter mit den Merkmalen des Patentanspruchs 1 gelöst. Vorteilhafte Ausgestaltungen sind Gegenstand der Unteransprüche.

Der Grundgedanke der Erfindung besteht demzufolge in der Schaffung eines ersten, eine Fluidströmung in den Saug-Rücklauffilter zulassenden Sitzventils (Nachsaugventils) mit einem frei (nicht federvorgespannten) hin- und her-bewegbaren, mit einem gehäusefesten ersten Ventilsitz zusammenwirkenden Ventilsitzkörper, in dem wiederum ein federvorgespanntes zweites Sitzventil (Vorspannventil) axial integriert ist, das bei Überschreiten der Federkraft eine Fluidströmung ausschließlich aus dem Saug-Rücklauffilter zulässt. D.h., dass das eine Ventil, vorliegend das Nachsaugventil, das andere Ventil, nämlich das Vorspannventil, vollständig aufnimmt. Auf diese Weise kann das Vorspann-/Nachsaugventil als eine Baueinheit vorgefertigt werden, die nur noch in den Filter eingesetzt werden muss.

Etwas konkreter besteht die Erfindung prinzipiell darin, vorzugsweise am Boden des Saug-Rücklauffilters ein Vorspann-/Nachsaugventil zu platzieren, welches überschüssiges Betriebsmittel vorzugsweise in einen Tank abfließen lässt und über welches eine ggf. fehlende Betriebsmittelmenge nachgesaugt wird. Das Vorspann-/Nachsaugventil besitzt hierfür eine koaxiale integrierte Bauweise, wonach ein erster Ventilsitzkörper oder Kolben des Nachsaugventils, der im Nachsaugbetrieb vorzugsweise auf einem inneren (gehäusefesten) Anschlag des Nachsaugventils aufsitzt, der ein Umströmen des Ventilsitzkörpers zulässt, ein integriertes Vorspannventil aufweist. Des Weiteren hat das Nachsaugventil einen zum inneren Anschlag axial beabstandeten ersten (äußeren) Ventilsitz, der bei einem Überdruck im Vorspann-/Nachsaugventil gegenüber dem Atmosphärendruck vom ersten Ventilsitzkörper verschlossen wird.

Im Rücklaufbetrieb hebt der erste Ventilsitzkörper des Nachsaugventils vom inneren Anschlag ab und kommt mit dem (axial zum inneren Anschlag beabstandeten) ersten Ventilsitz des Nachsaugventils in dichtende Anlage (verschließt diesen voll). Das im ersten Ventilsitzkörper des Nachsaugventils integrierte federvorgespannte Sitzventil hat einen in Schließposition federvorgespannten zweiten Ventilkörper, der im Rücklaufbetrieb bei Überschreiten eines (über die Vorspannfeder) vorbestimmten Drucks innerhalb des Filters das Sitzventil öffnet und Betriebsmittel nach außen freigibt.

D.h. im Nachsaugbetrieb strömt Betriebsmittel durch den geöffneten ersten Ventilsitz unter Umströmung des vorzugsweise am inneren Anschlag aufsitzenden ersten Ventilsitzkörpers in den Filter hinein und im Rücklaufbetrieb wird Betriebsmittel bei geschlossenem ersten Ventilsitz des Nachsaugventils und dem sich gegen die Federvorspannkraft öffnenden zweiten Ventilsitz des Vorspannventils nach Außen entspannt.

Erfindungsgemäß hat der Saug-Rücklauffilter ein ein- oder mehrteiliges Gehäuse, welches zumindest einen Rücklaufanschluss, einen Ausgangsanschluss und einen Tankanschluss aufweist, umfassend ein vorzugsweise hülsenförmiges Filterelement, das in einem Fluidpfad zwischen dem Rücklaufanschluss und dem Ausgangsanschluss angeordnet ist und umfassend das Vorspann-/Nachsaugventil, das stromab des Filterelements zwischen dem Ausgangsanschluss und dem Tankanschluss angeordnet ist. Erfindungsgemäß weist das Vorspann-/Nachsaugventil den ersten Ventilsitzkörper auf, welcher als bewegliches Ventilelement gegenüber dem gehäusefesten ersten Ventilsitz angeordnet ist, wobei am ersten Ventilsitzkörper der zweite Ventilsitz für den zweiten Ventilsitzkörper ausgebildet ist und wobei der erste Ventilsitzkörper eine Stützstruktur aufweist, an der sich das den zweiten Ventilsitzkörper gegen den zweiten Ventilsitz vorspannende Federelement abstützt. Diese integrierte Bauweise lässt sich einfach herstellen und montieren. Darüber hinaus ist sie besonders zuverlässig im Betrieb.

Dabei ist der erste Ventilsitzkörper in einem vorzugsweise bodenseitigen Abschnitt des Gehäuses beweglich geführt ist, wobei weiter ein weiteres Filter-/Siebelement an den bodenseitigen Abschnitt des Ventilsgehäuses des Vorspann-/Nachsaugventils angesetzt ist, an welchem der erste Ventilsitz für den Ventilsitzkörper ausgebildet ist. Hierdurch wird auf einfache Weise eine Reinigung des nachgesaugten und rückgeführten Betriebsmittels erreicht.

Vorteilhaft ist es auch, wenn der bodenseitige Abschnitt des Gehäuses mit einer Durchgangsbohrung versehen ist, welche mit ihrer äußeren Mündung als Tankanschluss dient und in welcher axial ausgerichtete Stege von der Innenwand radial vorstehen, wobei der erste Ventilsitzkörper auf den Stegen geführt ist. Dabei können die Stege jeweils eine Schulter aufweisen, welche den Anschlag für den ersten Ventilsitzkörper bilden. Dies stellt eine einfache, jedoch funktionelle Konstruktion zur Führung des ersten Ventilsitzkörpers dar, der bei Öffnen des ersten gehäusefesten Ventilsitzes nicht in das Innere des Filters gezogen wird und gleichzeitig gut vom nachgesaugten Betriebsmittel umströmt werden kann.

Die Erfindung wird nachstehend anhand eines bevorzugten Ausführungsbeispiels unter Bezugnahme auf die begleitenden Zeichnungen näher erläutert.
Fig. 1 zeigt den Längsschnitt eines Saug-Rücklauffilters mit Fein- und Grobfilteranordnung sowie Vorspann- und Nachsaugventil-Einrichtung gemäß einem bevorzugten Ausführungsbeispiel der Erfindung im Rücklauf-Saugbetrieb,
Fig. 2 zeigt den Längsschnitt des Saug-Rücklauffilters gemäß Fig. 1 im Bypass-Betrieb und
Fig. 3 zeigt den Längsschnitt des Saug-Rücklauffilters gemäß Fig. 1 im Nachsaugbetrieb,
Fig. 4 zeigt den Teillängsschnitt des erfindungsgemäßen Saug-Rücklauffilters im Rücklauf-Saugbetrieb, entsprechend Fig. 1, und
Fig. 5 zeigt den Teillängsschnitt des erfindungsgemäßen Saug-Rücklauffilters im Nachsaugbetrieb, entsprechend Fig. 3.

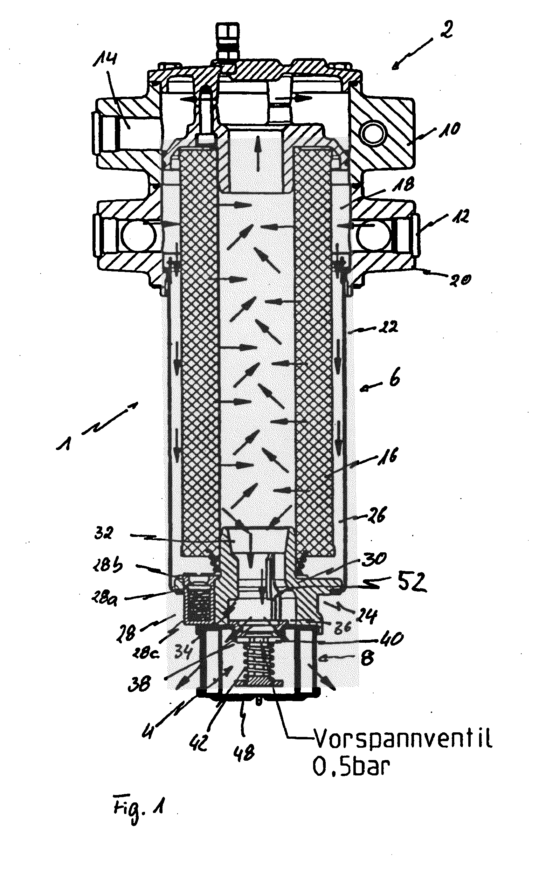

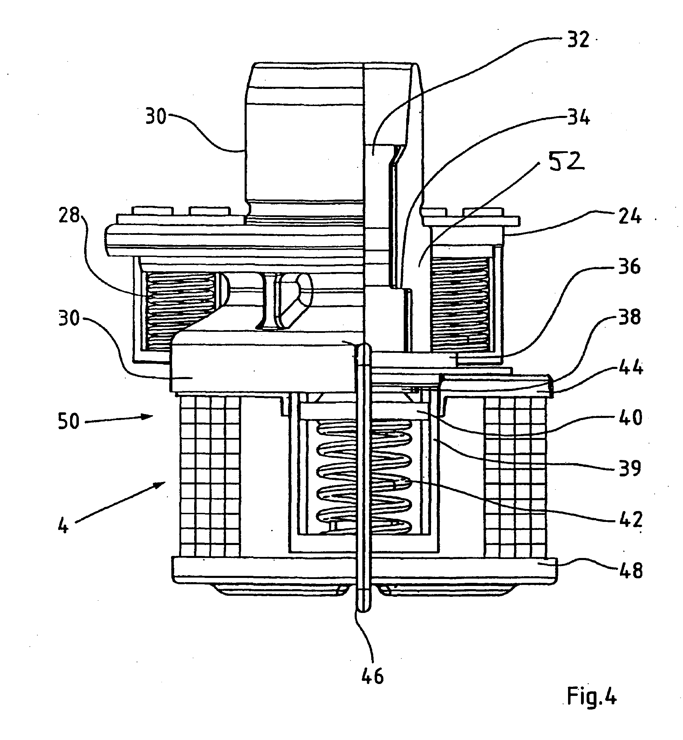

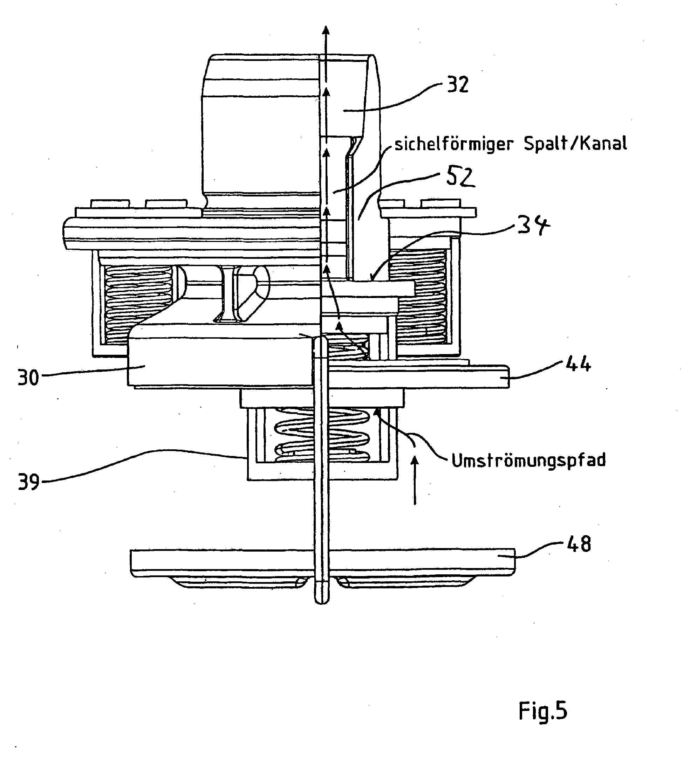

Der in der Fig. 1 - und in einem Ausschnitt detaillierter in Fig. 4 und Fig.5 - im Längsschnitt dargestellte Saug-Rücklauffilter gemäß dem bevorzugten Ausführungsbeispiel der Erfindung hat eine (innere) Filteranordnung 1 bestehend aus einem in einen nicht weiter dargestellten hydraulischen Kreislauf zwischengeschalteten Filterkopf 2 sowie einem ein Vorspann-Nachsaugventil 4 aufweisenden Filterunterbau 6 zur Anordnung in einem ebenfalls nicht gezeigten Druckmitteltank.

Der Filterkopf 2 besteht aus einem becherförmigen Gehäuseteil 10 mit zumindest einem hydraulischen Eingangsanschluss 12 (vorliegend zwei Eingangsanschlüsse) und einem in Axialabstand zum Eingangsanschluss 12 angeordneten hydraulischen Ausgangsanschluss 14, über die der Filter an den hydraulischen Kreislauf beispielsweise einer mobilen Arbeitsmaschine wie Straßenmaschine (Deckenfertiger, Straßenfräse, etc.) angeschlossen ist. In das becherförmige Gehäuseteil 10 ist ein Filterelement, vorzugsweise eine Feinfilterhülse 16 stirnseitig eingesetzt, derart, dass sich zwischen der Innenwand des becherförmigen Gehäuseteils 10 und der Außenwand der Feinfilterhülse 16 ein erster Ringspalt 18 ausbildet. Auf diese Weise wird innerhalb des Filterkopfs 2 ein Betriebsmittelströmungspfad ausgebildet, der vom Eingangsanschluss 12 über den ersten Ringspalt 18 durch die Feinfilterwandung hindurch in das Innere der Feinfilterhülse 16 (Feinheit z.B. 10µm) führt und von dort in den Ausgangsanschluss 14 mündet.

An der offenen Stirnseite des becherförmigen Gehäuseteils 10 ist ein Flanschring 20 um das Gehäuseteil 10 herum montiert oder ausgeformt, über den der Filterkopfs 2 an einen nicht gezeigten Betriebsmitteltank dichtend anflanschbar ist, derart, dass der Filterkopf 2 vom Tank nach außen absteht und der Filterunterbau 6 in den Tank hineinragt. An den Flanschring 20 ist eine Außenhülse 22 dichtend angeordnet, die sich im Radialabstand um die Feinfilterhülse 16 unterhalb des Filterkopfs 2 (d.h. im Abschnitt des Filterunterbaus 6) erstreckt und an ihrer freien Stirnseite von einer einen bodenseitigen Abschnitt 30 ausbildenden Ventilplatte 24 verschlossen ist. Hierdurch ergibt sich zwischen der äußeren Mantelfläche der Feinfilterhülse 16 und der inneren Mantelfläche der Außenhülse 22 ein zweiter Ringspalt 26, der mit dem ersten Ringspalt 18 innerhalb des Filterkopfs 2 fluidverbunden ist. Auf diese Weise wird das über den Eingangsanschluss 12 einströmende Druckmittel im Wesentlichen über die ganze Axiallänge der Feinfilterhülse 16 verteilt, wodurch die Filterfläche der Feinfilterhülse 16 maximal ausgenutzt und damit der Druckverlust bei Durchströmen des Feinfilters minimiert wird. Ferner bildet der Filterkopf 2, die Außenhülse 22 und die Ventilplatte 24 das Gehäuse des Saugrücklauffilters.

In die Ventilplatte 24 ist das Vorspann-Nachsaugventil 4 sowie ein Bypassventil 28 eingesetzt. Das Bypassventil 28, vorzugsweise ein Sitzventil, verbindet dabei den zweiten Ringspalt 26 zwischen Feinfilterhülse 16 und Außenhülse 22 mit der Außenseite (Tankinnenraum) und hat einen Ventilkörper, 28a der gegen den Druck innerhalb des zweiten Ringspalts 26 auf einen Ventilsitz 28b durch eine Ventilfeder 28c vorgespannt ist.

Das Vorspann-Nachsaugventil 4 hat den bodenseitigen Abschnitt 30 in Form eines hülsenartigen Ventilgehäuses, das fluiddicht in der inneren Mantelfläche der Feinfilterhülse 16 dichtend anliegt und vorliegend einstückig mit der Ventilplatte 24 ausgeformt ist. Alternativ hierzu kann das Ventilgehäuse 30 aber auch als in die Ventilplatte 24 einschraubbare oder einpressbare Patrone ausgebildet sein. Auf diese Weise verbleibt keine freie Passage zwischen dem zweiten Ringspalt 26 und dem Innern der Feinfilterhülse 16 sondern das Betriebsmittel (Hydraulikfluid, Schmiermittel, Kältemittel, etc.) ist bei geschlossenem Vorspann-Nachsaugventil 4 gezwungen, aus dem Ringspalt 26 ausschließlich durch die Feinfilterhülse 16 hindurch zu strömen, um zu dem Ausgangsanschluss 14 zu gelangen.

Das Vorspann-Nachsaugventil 4 hat vorliegend das hülsenförmige Ventilgehäuse 30, das in Längsrichtung mit einer Durchgangsbohrung oder Kanal 32 ausgebildet ist. In der Durchgangsbohrung 32 sind axial ausgerichtete Stege 52 angeordnet, die in Umfangsrichtung voneinander beabstandet sind und zwischen sich Umströmungskanäle oder -rinnen ausbilden. In einem axialen Mittenabschnitt des hülsenförmigen Ventilgehäuses 30 weisen die Stege 52 eine Art Schulter oder Vorsprung 34 auf, die eine Anschlagskante für eine Ventilsitzplatte 36 bildet, die axial bewegbar an den längsverlaufenden Stegen 52 gelagert ist und die einen Außendurchmesser hat, der so dimensioniert ist, dass die Ventilsitzplatte 36 bei in Anlage kommen mit der Schulter 34 von Betriebsmittel in den Umströmungskanälen in Axialrichtung umströmt werden kann.

An der Ventilsitzplatte (oder -kolben) 36, die vorliegend als eine Art Ringscheibe ausgebildet ist, ist ein radial innerer Ringbund 38 angeformt, in dem eine (mittige) Durchgangsbohrung 38 ausgebildet ist, die mittels eines Ventilkörpers 40, vorliegend ein Ventilteller, verschließbar ist. An der Ventilsitzplatte 36 ist hierfür eine Stützstruktur 39 vorzugsweise in Form eines Haltestifts oder Käfigs angeordnet, der sich senkrecht zur Ventilsitzplatte 36 (auf der zur Anschlagskante abgewandten Seite) erstreckt und an dem der Ventilkörper 40 verschiebbar gehalten ist. Des Weiteren ist eine Vorspannfeder 42 vorgesehen, die sich an dem freien Ende des Haltestifts bzw. an dem Käfig 39 abstützt und somit den Ventilkörper 40 gegen die Ventilsitzplatte 36 vorspannt, um die darin ausgebildete Durchgangsbohrung 38 mit einer bestimmten Vorspannkraft zu verschließen. Die Ventilsitzplatte 36, der Haltestift bzw. der Käfig 39, die Vorspannfeder 42 sowie der Ventilkörper 40 bilden somit einen in sich geschlossenen Kräftekreis.

Die zur Außenseite hinweisende Mündung der im Ventilgehäuse 30 ausgebildeten Durchgangsbohrung 32 ist mit einem Siebelement 50, vorzugsweise ein Filter (Nachsaugfilter), z.B. Gewebefilter in Sternfaltung mit einer Feinheit von 100µm oder alternativ ein Siebfilter/Siebkorb, abgedeckt. Dieses Siebelement 50 besteht aus einem geschlossenen Boden 44 mit einem mittig angeordneten Bohrloch oder Öffnung, an den senkrecht zum Boden 44 sich erstreckende Halteklammern 46 zur Befestigung des Siebelements 50 am Filtergehäuse 30 angeordnet sind. Des Weiteren können gemäß der Fig. 1 bis 3 axial sich erstreckende Streben angeordnet sein, an deren freien Enden ein vorzugsweise geschlossener Deckel 48 im Wesentlichen parallel zum Boden 44 aufgesetzt ist. Um die Streben ist ein Sieb oder dergleichen engmaschiges Gewebe gemäß vorstehender Beschreibung gezogen, wodurch das Siebelement 50 in Form einer Art Siebkäfig gebildet ist. Der Boden 44 des Siebkäfigs ist auf die freie Stirnseite des Ventilgehäuses 30 aufgesetzt und dort fixiert, z.B. verschraubt, verklebt oder verstemmt. Hierbei richtet sich das Bohrloch/Öffnung im Boden 44 des Siebkäfigs mittig über der Durchgangsbohrung 32 des Ventilgehäuses 30 aus, derart, dass der Boden 44 des Siebkäfigs bzw. die darin ausgebildete Öffnung einen Ventilsitz für die Ventilsitzplatte 36 des Vorspann-Nachsaugventils 4 darstellt. Konkreter ausgedrückt hat das Bohrloch/Öffnung im Boden 44 des Siebkäfigs einen Durchmesser, der kleiner ist als der max. Außendurchmesser der Ventilsitzplatte 36. Da die Ventilsitzplatte 36 frei axial verschiebbar in der Durchgangsbohrung 32 des Ventilgehäuses 30 gehalten ist, kann diese bei bestimmten Druckverhältnissen zwischen dem Innendruck innerhalb der Feinfilterhülse 16 und dem Außendruck im Tank entweder gegen die Anschlagskante 34 in der Durchgangsbohrung 32 oder gegen den Boden 44 des Siebkäfigs gedrückt sein. Im letzteren Fall dient die Ventilsitzplatte 36 (mit dem federvorgespannten Ventilteller 40 als axial integriertes Vorspannventil in Schließposition) selbst als ein Ventilkörper zum Verschließen des Bohrlochs/Öffnung im Boden 44 des Siebkäfigs.

Die Funktionsweise des erfindungsgemäßen Saug-Rücklauffilters und insbesondere des Vorspann-Nachsaugventils 4 wird nachfolgend anhand der Fig. 1-3 näher beschrieben:

Im normalen Betrieb der fluidtechnischen Anlage wie er in der Fig. 1 dargestellt ist, strömt Betriebsmittel vom Eingangsanschluss 12 längs des ersten und zweiten Ringspalts 18, 26 sowie durch die Feinfilterhülse 16 hindurch in den Innenraum der Feinfilterhülse 16 und von dort zu dem Ausgangsanschluss 14. Hierbei wird das Betriebsmittel vom Feinfilter 16 gereinigt und dadurch die Funktion von fluidtechnischen Bauteilen der fluidtechnischen Anlage sichergestellt.

Das Vorspann-Nachsaugventil 4 regelt dabei den Betriebsmitteldruck im Normalbetrieb auf einen über die Vorspannfeder 42 voreingestellten Wert, vorliegend auf einen Überdruck von 0.5 bar gegenüber Atmosphäre. Im Rahmen dieser frei wählbaren Voreinstellung wird die Ventilsitzplatte 36 des Nachsaugventils vom geringen Überdruck innerhalb der Feinfilterhülse 16 gegen das Bohrloch/Öffnung im Boden 44 des Siebkäfigs gedrückt, um dieses zu schließen. Des Weiteren wird der Ventilkörper 40 in Form des Ventiltellers des integrierten Vorspannventils gegen die Durchgangsbohrung 38 innerhalb der Ventilsitzplatte 36 des Nachsaugventils durch die Vorspannfeder 42 gedrückt, um diese zu verschließen. Bei Überschreiten des voreingestellten Betriebsmittel-Druckwerts (vorliegend vorzugsweise 0.5 bar) wird der Ventilkörper 40 des integrierten Vorspannventils entgegen der Federvorspannung von der Durchgangsbohrung 38 in der Ventilsitzplatte 36 des Nachsaugventils abgehoben und überschüssiges Betriebsmittel kann sich durch den Siebkäfig hindurch in den Betriebsmitteltank entspannen.

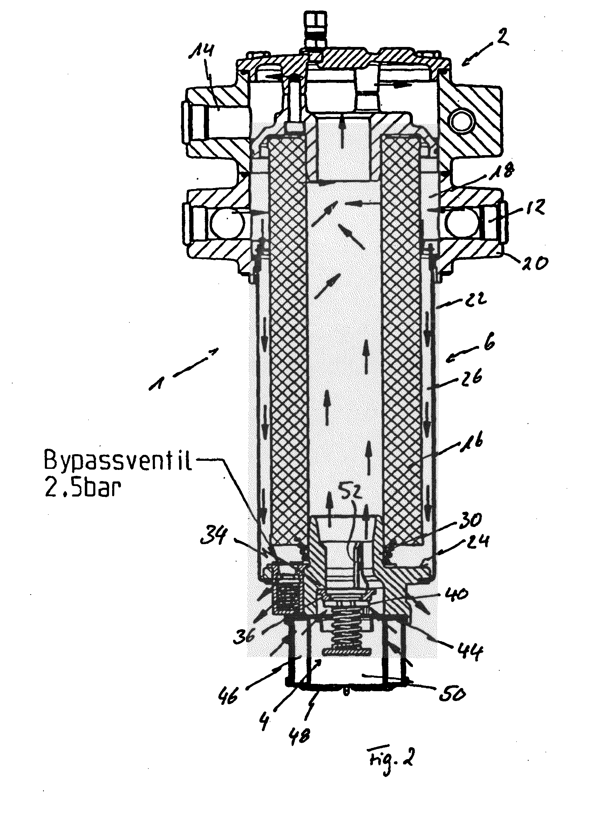

Sollte sich im Betrieb ein erheblicher Überdruck im hydraulischen Kreislauf aufbauen (im bevorzugten Ausführungsbeispiel auf max. 2.5 bar eingestellt), wird dieser im Rahmen eines Bypass-Betriebs gemäß der Fig. 2 über das Bypassventil 28 entspannt. Ein solcher Überdruck kann z.B. dann entstehen, wenn die Feinfilterhülse 16 einen zu großen Strömungswiderstand bildet. Hierbei strömt Betriebsmittel längs des Ringspalts 26 zwischen der Feinfilterhülse 16 und der Außenhülse 22 durch das sich öffnende Bypassventil 28 in den nicht weiter dargestellten Betriebsmitteltank. Gleichzeitig entsteht ein Unterdruck auf der Saugseite des Filters im inneren Bereich der Feinfilterhülse 16, was dazu führt, dass der Ventilkörper 40 des Vorspannventils durch die Vorspannfeder 42 auf die in der Ventilsitzplatte 36 des Nachsaugventils ausgebildete Durchgangsbohrung 38 gedrückt wird und diese erschließt. Daraufhin wird die Ventilsitzplatte 36 vom entstehenden Unter- /Niederdruck im Innenbereich der Feinfilterhülse 16 quasi angesaugt. D.h. sie hebt vom Bohrloch/Öffnung im Boden 44 des Siebkäfigs ab (das Bohrloch wird geöffnet) und kommt mit der Anschlagskante 34 in der Durchgangsbohrung 32 des Ventilgehäuses 30 in Anlage, wo es von Betriebsmittel umströmt werden kann, wie dies vorstehend bereits beschrieben wurde. Auf diese Weise kann der Betriebsmittelverlust im Kreislauf, der durch das offene Bypassventil 28 entsteht, durch den/die Spalt(e) oder Umströmungskanäle zwischen der Ventilsitzplatte 36 und dem Ventilgehäuse 30 im Bereich des Anschlagkantenabschnitts der Durchgangsbohrung 32 ausgeglichen werden. Dabei passiert das Betriebsmittel auch gleichzeitig den Siebkäfig und wird dadurch zumindest grob gesiebt/gefiltert.

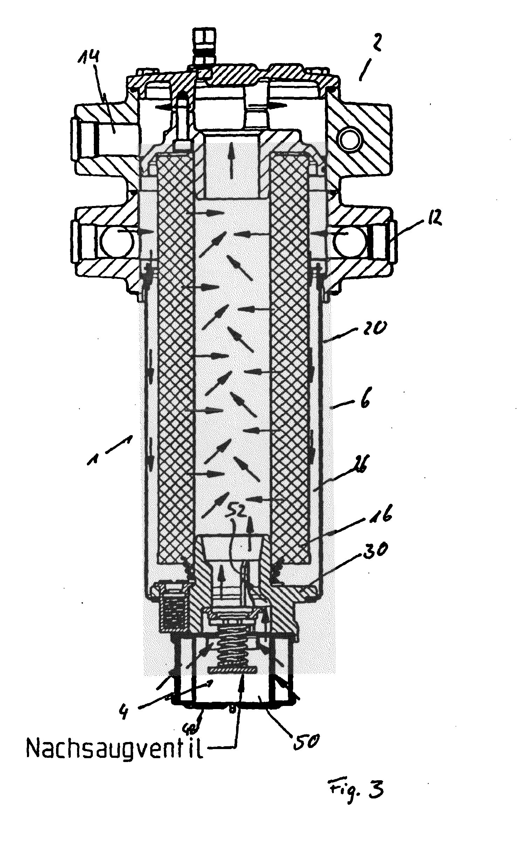

Im normalen Nachsaug-Betrieb entsteht in dem Fall eines Betriebsmittelmangels innerhalb des hydraulischen Kreislaufs (beispielsweise infolge von üblichen Leckageverlusten) ein Druckabfall, der bei Unterschreiten eines vorbestimmten Druckwerts zum Öffnen des Nachsaugventils führt. Dieser Betriebszustand ist in den Figuren 3 und 5 gezeigt. Konkreter ausgedrückt, hebt in einem solchen Fall die Ventilsitzplatte 36 des Nachsaugventils vom Bohrloch/Öffnung im Boden 44 des Siebkäfigs ab und verschiebt sich innerhalb der Durchgangsbohrung 32 des Ventilgehäuses 30 nach Innen (in Richtung Feinfilterhülse 16) solange, bis die Ventilsitzplatte 36 mit der Anschlagskante (Schulter 34) innerhalb der Durchgangsbohrung 32 des Ventilgehäuses 30 in Anlage kommt (Durchgangsbohrung 38 des Vorspannventils geschossen). Da, wie vorstehend bereits ausgeführt wurde, der Außendurchmesser der Ventilsitzplatte 36 so gewählt ist, dass in dieser Position die Umströmungskanäle zwischen sich und der Durchgangsbohrung 32 im Ventilgehäuse 30 (infolge der axial verlaufenden Stege 52 innerhalb der Durchgangsbohrung 32) verbleiben, kann das Betriebsmittel durch diese Umströmungskanäle aus dem Druckmitteltank in den Innenraum der Feinfilterhülse 16 nachströmen und so den Leckageverlust ausgleichen. Hierbei durchströmt das nachgesaugte Betriebsmittel zwangsläufig den Siebkäfig und wird hierdurch zumindest grob gesiebt/gefiltert.

Auf diese Weise kann im Normalbetrieb einschließlich eines Überdruckzustands (gemäß Fig. 1) wie auch im Nachsaugbetrieb des Saug-Rücklauffilters (gemäß Fig. 3) immer eine ausreichende Filterung des Betriebsmittels (beispielsweise Hydrauliköl, Schmiermittel, Kältemittel, etc.) gewährleistet werden, ohne dass sich hohe Druckverluste in den jeweiligen Betriebsarten einstellen.

### Bezugszeichenliste

- 1: innere Filteranordnung
- 2: Filterkopf
- 4: Vorspann-/Nachsaugventil
- 6: Filterunterbau
- 8: Siebelement/Siebkäfig
- 10: Gehäuseteil
- 12: Eingangs-/Rücklaufanschluss
- 14: Ausgangsanschluss
- 16: Filterelement/Feinfilterhülse
- 18: erster Ringspalt
- 20: Flanschring
- 22: Außenhülse
- 24: Ventilplatte
- 26: zweiter Ringspalt
- 28: Bypassventil
- 28a: Bypass-Ventilkörper
- 28b: Bypass-Ventilsitz
- 28c: Bypass-Ventilfeder
- 30: Ventilgehäuse/bodenseitiger Abschnitt
- 32: Durchgangsbohrung des Ventilgehäuses
- 34: Schulter/Anschlagskante
- 36: Ventilsitzplatte/-körper des Nachsaugventils
- 38: Durchgangsbohrung bildet (zweiten) Ventilsitz im Vorspannventil
- 39: Stützstruktur
- 40: Ventilkörper/Ventilteller des Vorspannventils
- 42: Federelement/Vorspannfeder des Vorspannventils
- 44: Boden des Siebkäfigs bildet äußeren (ersten) Ventilsitz des Nachsaugventils
- 46: Halteklammen
- 48: Deckel
- 50: Sieb
- 52: Steg

## Patentansprüche

1. Saug-Rücklauffilter mit einem ein- oder mehrteiligen Gehäuse, welches zumindest einen Rücklaufanschluss (12) einen Ausgangsanschluss (14) und einen Tankanschluss aufweist, umfassend ein Filterelement (16), das in einem Fluidpfad zwischen dem Rücklaufanschluss (12) und dem Ausgangsanschluss (14) angeordnet ist und umfassend ein Vorspann-/Nachsaugventil (4), das stromab des Filterelements (16) zwischen dem Ausgangsanschluss (14) und dem Tankanschluss angeordnet ist, wobei das Vorspann-/Nachsaugventil (4) einen ersten Ventilsitzkörper (36) aufweist, welcher als bewegliches Ventilelement gegenüber einem gehäusefesten ersten Ventilsitz (44) angeordnet ist, wobei am ersten Ventilsitzkörper (36) ein zweiter Ventilsitz (38) für einen zweiten Ventilsitzkörper (40) ausgebildet ist und wobei der erste Ventilsitzkörper (36) eine Stützstruktur (39) aufweist, an der sich ein den zweiten Ventilsitzkörper (40) gegen den zweiten Ventilsitz (38) vorspannendes Federelement (42) abstützt,
und wobei der erste Ventilsitzkörper (36) in einem vorzugsweise bodenseitigen Abschnitt (30) des Gehäuses beweglich geführt ist,
**gekennzeichnet durch**
ein weiteres Filter-/Siebelement (8), welches an dem besagten bodenseitigen Abschnitt (30) des Gehäuses angesetzt ist und an welchem der erste Ventilsitz (44) für den ersten Ventilsitzkörper (36) ausgebildet ist.

2. Saug-Rücklauffilter nach Anspruch 1, **dadurch gekennzeichnet, dass** das Filter-/Siebetement (8) einen vorzugsweise plattenförmigen Boden (44) hat, in dem der Ventilsitz für den ersten Ventilsitzkörper (36) als Öffnung ausgeformt ist.

3. Saug-Rücklauffilter nach einem der Ansprüche 1 oder 2, **dadurch gekennzeichnet, dass** der Abschnitt (30) des Gehäuses mit einer Durchgangsbohrung (32) versehen ist, welche mit ihrer äußeren Mündung als Tankanschluss dient und in welcher axial ausgerichtete Stege (52) von der Innenwand radial vorstehen, wobei der erste Ventilsitzkörper auf den Stegen (52) geführt ist.

4. Saug-Rücklauffilter nach Anspruch 3, **dadurch gekennzeichnet, dass** die Stege (52) jeweils eine Schulter (34) aufweisen, welche einen Anschlag für den ersten Ventilsitzkörper (36) bilden.

5. Saug-Rücklauffilter nach einem der vorstehenden Ansprüche, **dadurch gekennzeichnet, dass** das Vorspann-/Nachsaugventil (4) zwei parallel durchströmbare, entgegengesetzt öffnende Rückschlagventile umfasst, von welchen der erste Ventilsitz (44) und der erste Ventilssitzkörper (36) ein Nachsaugventil bilden, welches ein Nachsaugen von Fluid aus dem Tankanschluss erlaubt und von welchem der zweite Ventilsitzkörper (40) und der zweite Ventilsitz (38) ein Vorspannventil bilden, welches den Druck im Ausgangsanschluss auf einen mittels des Federelements vorgegebenen Druck begrenzt.

6. Saug-Rücklauffilter nach einem der vorstehenden Ansprüche, **gekennzeichnet durch** einen Filterkopf (2) der ein becherförmiges Gehäuseteil (10) ausbildet, an dem der Rücklaufanschluss (12) und der Ausgangsanschluss (14) angeordnet sind.

7. Saug-Rücklauffilter nach Anspruch 6, **gekennzeichnet durch** einen Filterunterbau (6), in dem das Filterelement (16) angeordnet ist, die an ihrer einen Stirnseite am Filterkopf (2) angeflanscht ist, derart, dass sich zwischen dem Filterelement (16) und dem becherförmigen Gehäuseteil (10) ein erster Ringspalt (18) ausbildet.

8. Saug-Rücklauffilter nach Anspruch 7, **dadurch gekennzeichnet, dass** das Filterelement (16) von einer ebenfalls am Filterkopf (2) angeflanschen Außenhülse (22) umgeben ist, die hierbei zwischen sich und dem Filterelement (16) einen zweiten Ringspalt (26) ausbildet, welche mit dem ersten Ringspalt (18) eine Fluidverbindung hat.

9. Saug-Rücklauffilter nach einem der Ansprüche 7 oder 8, **dadurch gekennzeichnet, dass** das Gehäuse eine Ventilplatte (24) hat, die am Filterunterbau (6) und vorzugsweise an der freien Stirnseite des Filterelements (16) angeordnet ist und den bodenseitigen Abschnitt (30) bildet, um das Innere des Filterelements (16) von der Außenseite zu verschließen, wobei ein Bypass-Ventil (28) in die Ventilplatte (24) parallel zum Vorspann-Nachsaugventil (4) eingesetzt ist, welches einen Überdruck im Saug-Rücklauffilter unmittelbar nach Außen entspannt.

10. Saug-Rücklauffilter nach einem der vorstehenden Ansprüche, **dadurch gekennzeichnet, dass** der erste Ventilsitzkörper (36) tellerförmig ausgebildet ist, wobei die Stützstruktur (39) ein am Ventilssitzkörper (36) ausgebildeter oder befestigter Käfigfortsatz ist, in dem der zweite Ventilsitzkörper (40) gelagert ist.

11. Saug-Rücklauffilter nach Anspruch 10, **dadurch gekennzeichnet, dass** der Käfigfortsatz (39) durch den ersten Ventilsitz (44) hindurch ragt.

## Claims

1. Suction return filter having a single-part or multi-part housing which has at least one return port (12), one outlet port (14) and one tank port, comprising a filter element (16) which is arranged in a fluid path between the return port (12) and the outlet port (14) and comprising a counterbalance/replenishment valve (4) which is arranged downstream of the filter element (16) between the outlet port (14) and the tank port, wherein the counterbalance/replenishment valve (4) has a first valve seat body (36) which, as a movable valve element, is arranged opposite a first valve seat (44) that is fixed with respect to the housing, wherein a second valve seat (38) for a second valve seat body (40) is formed on the first valve seat body (36), and wherein the first valve seat body (36) has a supporting structure (39) on which there is supported a spring element (42) which preloads the second valve seat body (40) against the second valve seat (38),
and wherein the first valve seat body (36) is guided movably in a preferably base-side section (30) of the housing,
**characterized by**
a further filter/screen element (8) which is mounted on said base-side section (30) of the housing and on which the first valve seat (44) for the first valve seat body (36) is formed.

2. Suction return filter according to Claim 1, **characterized in that** the filter/screen element (8) has a preferably plate-shaped base (44) in which the valve seat for the first valve seat body (36) is formed as an opening.

3. Suction return filter according to either of Claims 1 and 2, **characterized in that** the section (30) of the housing is provided with a passage bore (32) which serves, by way of its outer opening-out point, as a tank port and in which axially oriented webs (52) project radially from the inner wall, wherein the first valve seat body is guided on the webs (52).

4. Suction return filter according to Claim 3, **characterized in that** the webs (52) each have a shoulder (34), which shoulders (34) form an abutment for the first valve seat body (36).

5. Suction return filter according to one of the preceding claims, **characterized in that** the counterbalance/replenishment valve (4) comprises two oppositely opening check valves through which flow can pass in parallel and of which the first valve seat (44) and the first valve seat body (36) form a replenishment valve, the latter permitting replenishment of fluid from the tank port, and of which the second valve seat body (40) and the second valve seat (38) form a counterbalance valve, the latter limiting the pressure in the outlet port to a pressure predefined by means of the spring element.

6. Suction return filter according to one of the preceding claims, **characterized by** a filter head (2) which forms a cup-shaped housing part (10) on which the return port (12) and the outlet port (14) are arranged.

7. Suction return filter according to Claim 6, **characterized by** a filter substructure (6) in which the filter element (16) is arranged, which filter element is flange-mounted at one face side thereof on the filter head (2) such that a first annular gap (18) is formed between the filter element (16) and the cup-shaped housing part (10).

8. Suction return filter according to Claim 7, **characterized in that** the filter element (16) is surrounded by an outer sleeve (22) which is likewise flange-mounted on the filter head (2) and which, in this case, forms a second annular gap (26) between itself and the filter element (16), which second annular gap has a fluid connection to the first annular gap (18).

9. Suction return filter according to either of Claims 7 and 8, **characterized in that** the housing has a valve plate (24) which is arranged on the filter substructure (6) and preferably on the free face side of the filter element (16) and which forms the base-side section (30) for closing off the interior of the filter element (16) with respect to the outside, wherein a bypass valve (28) is inserted into the valve plate (24) in parallel with the counterbalance/replenishment valve (4), by means of which bypass valve a positive pressure in the suction return filter is released directly to the outside.

10. Suction return filter according to one of the preceding claims, **characterized in that** the first valve seat body (36) is of disc-shaped form, wherein the supporting structure (39) is a cage projection which is formed on or fastened to the valve seat body (36) and in which the second valve seat body (40) is mounted.

11. Suction return filter according to Claim 10, **characterized in that** the cage projection (39) projects through the first valve seat (44).

## Revendications

1. Filtre retour-aspiration avec un boîtier en une ou plusieurs parties, qui présente au moins un raccord de retour (12), un raccord de sortie (14) et un raccord de réservoir, comprenant un élément de filtre (16), qui est disposé dans un chemin de fluide entre le raccord de retour (12) et le raccord de sortie (14) et comprenant une soupape de précharge/post-aspiration (4), qui est disposée en aval de l'élément de filtre (16) entre le raccord de sortie (14) et le raccord de réservoir, dans lequel la soupape de précharge/post-aspiration (4) présente un premier corps de siège de soupape (36), qui est disposé comme élément de soupape mobile par rapport à un premier siège de soupape (44) solidaire du boîtier, dans lequel un deuxième siège de soupape (38) pour un deuxième corps de siège de soupape (40) est formé sur le premier corps de siège de soupape (36) et dans lequel le premier corps de siège de soupape (36) présente une structure d'appui (39), sur laquelle s'appuie un élément de ressort (42) précontraignant le deuxième corps de siège de soupape (40) contre le deuxième siège de soupape (38), et dans lequel le premier corps de siège de soupape (36) est guidé en mouvement dans une partie (30) du boîtier de préférence du côté du fond, **caractérisé par** un autre élément de filtre/tamis (8), qui est posé sur ladite partie (30) du boîtier du côté du fond et sur lequel est formé le premier siège de soupape (44) pour le premier corps de siège de soupape (36).

2. Filtre retour-aspiration selon la revendication 1, **caractérisé en ce que** l'élément de filtre/tamis (8) comporte un fond (44) de préférence en forme de plaque, dans lequel le siège de soupape pour le premier corps de siège de soupape (36) est réalisé sous la forme d'une ouverture.

3. Filtre retour-aspiration selon l'une des revendications 1 ou 2, **caractérisé en ce que** la partie (30) du boîtier est pourvue d'un alésage de passage (32), qui fait office de raccord de réservoir avec son embouchure extérieure et dans lequel des nervures orientées axialement (52) sont saillantes radialement à partir de la paroi intérieure, dans lequel le premier corps de siège de soupape est guidé sur les nervures (52).

4. Filtre retour-aspiration selon la revendication 3, **caractérisé en ce que** les nervures (52) présentent respectivement un épaulement (34), qui forme une butée pour le premier corps de siège de soupape (36).

5. Filtre retour-aspiration selon l'une quelconque des revendications précédentes, **caractérisé en ce que** la soupape de précharge/post-aspiration (4) comprend deux soupapes de non-retour à écoulement parallèle, s'ouvrant en sens contraire, dont le premier siège de soupape (44) et le premier corps de siège de soupape (36) forment une soupape de post-aspiration, qui permet une post-aspiration de fluide à partir du raccord de réservoir, et dont le deuxième corps de siège de soupape (40) et le deuxième siège de soupape (38) forment une soupape de précharge, qui limite la pression dans le raccord de sortie à une pression prédéterminée au moyen de l'élément de ressort.

6. Filtre retour-aspiration selon l'une quelconque des revendications précédentes, **caractérisé par** une tête de filtre (2), qui forme une partie de boîtier en forme de coupe (10), sur laquelle le raccord de retour (12) et le raccord de sortie (14) sont disposés.

7. Filtre retour-aspiration selon la revendication 6, **caractérisé par** une base de filtre (6), dans laquelle l'élément de filtre (16) est disposé, qui est fixée par son premier côté frontal à la tête de filtre (2), de telle manière qu'une première fente annulaire (18) se forme entre l'élément de filtre (16) et la partie de boîtier en forme de coupe (10).

8. Filtre retour-aspiration selon la revendication 7, **caractérisé en ce que** l'élément de filtre (16) est entouré par une douille extérieure (22) également fixée à la tête de filtre (2), qui forme ainsi entre elle-même et l'élément de filtre (16) une deuxième fente annulaire (26), qui est en communication de fluide avec la première fente annulaire (18).

9. Filtre retour-aspiration selon l'une quelconque des revendications 7 ou 8, **caractérisé en ce que** le boîtier comporte une plaque de soupape (24), qui est disposée sur la base de filtre (6) et de préférence à la face frontale libre de l'élément de filtre (16) et qui forme la partie de boîtier du côté du fond (30), afin de fermer l'intérieur de l'élément de filtre (16) par le côté extérieur, dans lequel une soupape de dérivation (28) est introduite dans la plaque de soupape (24) parallèlement à la soupape de précharge/- post-aspiration (4), qui détend immédiatement vers l'extérieur une surpression dans le filtre retour-aspiration.

10. Filtre retour-aspiration selon l'une quelconque des revendications précédentes, **caractérisé en ce que** le premier siège de corps de soupape (36) est réalisé en forme de disque, dans lequel la structure d'appui (39) est un prolongement en forme de cage formé sur ou fixé au corps de siège de soupape (36), et dans lequel le deuxième corps de siège de soupape (40) est monté.

11. Filtre retour-aspiration selon la revendication 10, **caractérisé en ce que** le prolongement en forme de cage (39) passe à travers le premier siège de soupape (44).
